# EUROPÄISCHE PATENTANMELDUNG

(11) **EP 3 369 648 A1**
(43) Veröffentlichungstag der Anmeldung: **05.09.2018**
(21) Anmeldenummer: 18157350.2
(22) Anmeldetag: 19.02.2018
(51) Int. Cl.: B62J 1/28

(54) **SYSTEM FÜR EIN LAUFRAD ODER EIN FAHRRAD SOWIE EIN ENTSPRECHENDES LAUFRAD ODER FAHRRAD**

(30) Priorität: 02.03.2017 DE 202017101175 U; 24.11.2017 DE 102017127861
(71) Anmelder: Kutsche, Gottfried, 40723 Hilden (DE)
(72) Erfinder: Kutsche, Gottfried, 40723 Hilden (DE)
(74) Vertreter: Angerhausen, Christoph

(57) **Zusammenfassung**

Die Erfindung betrifft ein System für ein Laufrad oder ein Fahrrad, wobei das System eine Druckplatte (1) mit einer Anlagekontur (1.1) für das Abdomen einer Person sowie eine Haltevorrichtung (2) aufweist, wobei die Druckplatte (1) gegenüber der Vertikalen angeschrägt ist, so dass ein unteres Ende der Druckplatte (1) einem oberen Ende der Druckplatte vorgelagert ist, wobei die Druckplatte (1) dazu eingerichtet ist, mittels der Haltevorrichtung (2) unter einem vertikalen Abstand an einem Rahmen (3) des Landfahrzeugs zwischen einer Lenkstange (8) und einem Sattel (4) und mit der Anlagekontur (1.1) dem Sattel (4) zugewandt befestigt werden zu können, so dass das untere Ende der Druckplatte (1) einen kürzeren Abstand zu dem Sattel (4) aufweist als das obere Ende der Druckplatte (1). Es wird weiterhin ein entsprechendes Laufrad oder Fahrrad beschrieben.

## Beschreibung

Die Erfindung betrifft ein System für ein Laufrad oder ein Fahrrad sowie ein entsprechendes Laufrad oder Fahrrad. Das System kann als ein Nachrüstsatz für ein Laufrad oder ein Fahrrad bereitgestellt werden. Ein derartiges Laufrad oder Fahrrad kann beispielweise zu Therapiezwecken verwendet werden, etwa für die postoparative Mobilisierung und für den Muskelwiederaufbau.

Aus dem Stand der Technik bekannte Laufräder und Fahrräder haben insbesondere den Nachteil, dass der Fahrer auf einem Sattel sitzend mehr oder weniger seines Gewichts über die Hände und/oder Arme abstützen muss, wenn er nach vorne in Richtung Lenkstange vorgebeugt sitzt, oder über sein Gesäß, wenn er eher aufrecht sitzt, was jedoch vielen zur Mobilisierung anstehenden Patienten nicht möglich ist.

Die DE 20 2011 004 794 U1 beschreibt einen Fahrradsattel, der gleichzeitig Hände, Arme, Schultergürtel und die Wirbelsäule entlasten soll und dazu ein Aluminiumgestänge aufweist, das korbartig den Körper eines Fahrers umgibt und somit neben der klassischen Funktion als Sattel den Rumpfbereich zusätzlich unterstützt. Diese wannenartige Konstruktion ist mittels eines Gelenks schwenkbar am Fahrradrahmen befestigt und ermöglicht es so dem Fahrer, unterschiedliche Sitzpositionen von nach vom gebeugt bis aufrecht einzunehmen.

Die DE 20 2012 000 857 U1 offenbart ein Fahrrad, das einen verstellbaren Fahrradlenker aufweist. Der Lenker ist dabei um die Achse des Lenkerrohres schwenkbar und in unterschiedlichen Winkelstellungen arretierbar. Ein Benutzer kann sich dadurch in unterschiedliche Sitzpositionen begeben und dabei zwischen Abstufungen von ganz aufrecht bis weit nach vorne gebeugt auswählen. Durch das Ändern der Sitzposition können so insbesondere bei längeren Touren oder bei Personen mit höherem Körpergewicht auftretende schmerzhafte Druckstellen vermieden werden.

In der DE 10 2011 079 324 A1 ist ein Stützsattel offenbart, der ein Sattelelement aufweist und über eine Sattelstange am Fahrrad befestigt ist. Der Sattel weist eine in Fahrtrichtung orientierte und nach vorne geneigte Stützfläche auf, auf der ein Fahrer sein Gesäß oder Becken abstützen kann. Aufgrund des hohen Anstellwinkels soll der Druck auf den Dammbereich des Fahrers reduziert und somit eine Einschränkung der Durchblutung in dieser Region vermieden werden.

Es ist daher die objektive Aufgabe der vorliegenden Erfindung, ein System der eingangs beschriebenen Art sowie ein entsprechendes Laufrad oder Fahrrad derart weiterzuentwickeln, dass eine Entlastung von Händen und/oder Armen sowie des Gesäßes erreicht wird.

Demgemäß weist das System eine Druckplatte mit einer Anlagekontur für das Abdomen einer Person sowie eine Haltevorrichtung auf, wobei die Druckplatte gegenüber der Vertikalen angeschrägt ist, so dass ein unteres Ende der Druckplatte einem oberen Ende der Druckplatte vorgelagert ist, wobei die Druckplatte dazu eingerichtet ist, mittels der Haltevorrichtung unter einem vertikalen Abstand an einem Rahmen des Laufrads oder Fahrrads zwischen einer Lenkstange und einem Sattel und mit der Anlagekontur dem Sattel zugewandt befestigt werden zu können, so dass das untere Ende der Druckplatte einen kürzeren Abstand zu dem Sattel aufweist als das obere Ende der Druckplatte.

Somit stellt die Druckplatte, welche konvex geformt sein kann, zu jedem Zeitpunkt der Aktivität von Läufer/Fahrradfahrer eine ergonomische Anlagefläche für die Bauchregion zur Verfügung. Für den Benutzer bietet die Erfindung eine körperliche Entlastung, Hände und Arme werden nahezu von der Stützarbeit am Lenker befreit und es sichert das Sitzen auf dem Sattel. Für Sportler aller Laufsportarten ist es ein Trainingsgerät, das das Erarbeiten von Kraft und Ausdauer bei gleichzeitiger Entlastung aller großen Gelenke ermöglicht.

Vorteilhafterweise kann die Druckplatte dabei an einem oberen Ende der Haltevorrichtung befestigt sein und die Haltevorrichtung an ihrem unteren Ende ein Befestigungsmittel zur Befestigung der Haltevorrichtung am Rahmen des Laufrads oder Fahrrads aufweisen.

Zur gleichmäßigen Kraftübertragung kann die Haltevorrichtung mittig an der der Anlagekontur abgewandten Seite der Druckplatte befestigt sein.

Dabei kann die Druckplatte vorzugsweise Außenmaße mit Breite x Höhe von 20 - 30 cm x 15 - 25 cm und vorzugsweise 25 x 18 cm aufweisen. Bei geringeren Abmessungen würde die rechte/linke Kante der Druckplatte zu schmerzhaften Erscheinungen in der Bauchregion führen.

Grundsätzlich ist die Druckplatte nicht schwenkbar. Sie kann jedoch insbesondere mithilfe der Klemmeinheit in Horizontalrichtung und/oder in Vertikalrichtung verstellbar und variabel festlegbar sein. Zum individuellen Anpassen auf unterschiedliche Sitzpositionen kann die Druckplatte um eine Achse senkrecht zur Fahrzeuglängsmittelebene um das obere Ende der Haltevorrichtung verschwenkbar sein, wobei der Winkel zwischen Druckplatte und Haltevorrichtung variabel einstellbar und mittels einer Klemmvorrichtung fixierbar ist.

Ferner kann die Haltevorrichtung eine Anschlagkante aufweisen, die den maximal einstellbaren Winkel des Sattels zur Vertikalen begrenzt. Vorteilhafterweise kann auch der vertikale Abstand der Druckplatte zum Rahmen des Laufrads oder Fahrrads variabel einstellbar sein.

Zur Bereitstellung einer Entscheidungsoption zwischen größtmöglicher Variabilität oder hoher Stabilität kann die Druckplatte wahlweise beweglich oder ortsfest an der Haltevorrichtung befestigt sein.

Zur Bereitstellung einer besonders ergonomischen Anlagefläche kann die zu einem Sattel des Laufrads oder Fahrrads weisende Außenseite der Druckplatte im Querschnitt durch die Fahrzeuglängsmittelebene einen konvexen Verlauf aufweisen. Dabei kann zur Erzielung einer möglichst optimalen Druckverteilung auf dem Abdomen eines Benutzers der Radius der Krümmung des konvexen Verlaufs der Anlagekontur zur Mitte der Druckplatte hin zunehmen, so dass sich die Anlagenkontur zur Mitte hin abflacht. Insbesondere kann der Krümmungsradius des konvexen Verlaufs der Anlagekontur von dem ersten Ende und dem zweiten Ende der Anlagekontur zur Mitte der Anlagekontur zwischen dem ersten und dem zweiten Ende hin zunehmen, so dass die Anlagekontur im Bereich der Enden stärker gekrümmt ist, als in der Mitte.

Vorzugsweise ist die Druckplatte nicht gepolstert, da der Läufer die konvexe Druckplatte nur in solchen Bauchregionen zur Anlage bringt, in denen die Bauchmuskulatur vorhanden ist. Dabei geraten keine knöchernen Anteile wie die Schambeinfuge oder der untere Rippenbogen mit der Druckplatte in Kontakt, so dass keine Druckschmerzen entstehen können.

Als besonders flexibel und platzsparend erweist es sich, wenn die Haltevorrichtung zum lösbaren Festlegen an einem Rahmen des Laufrads oder Fahrrads eingerichtet ist. Besonders einfach und kostengünstig ist die Haltevorrichtung mittels einer Schraubverbindung am Rahmen des Laufrads oder Fahrrads festlegbar. Ferner kann das Befestigungsmittel eine Klemmvorrichtung aufweisen, mit der die Haltevorrichtung am Rahmen des Fahrrads oder Laufrads festgelegt ist. Die Schraubverbindung kann dabei so ausgeführt sein, dass die Haltevorrichtung ein Außengewinde aufweist, das in ein entsprechendes Innengewinde des Rahmens einschraubbar ist.

Für eine möglichst variable Anpassung des Systems an unterschiedlich große Nutzer des Laufrads oder Fahrrads ist die Druckplatte vorteilhafterweise höhenverstellbar. Zur besonders einfachen Höheneinstellung der Druckplatte kann die Haltevorrichtung dabei eine Teleskopstange aufweisen, die stufenlos mittels einer Schraub- oder Klemmverbindung arretierbar ist. Alternativ oder darüber hinaus kann die Haltevorrichtung eine Stange aufweisen, die in eine Aufnahme entsprechenden Durchmessers im Rahmen einsteckbar und mittels einer Klemmverbindung stufenlos arretierbar ist.

Für eine variable Anpassung an den Bauchumfang eines Benutzers des Laufrads oder Fahrrads kann die Haltevorrichtung innerhalb der Fahrzeuglängsmittelebene des Laufrads oder Fahrrads verschieblich an einem Oberrohr des Rahmens fixierbar sein.

Ein schnelles Einstellen der horizontalen Ausrichtung der Haltevorrichtung kann dadurch erreicht werden, dass die Haltevorrichtung zum Erzeugen der benötigten Klemmkraft zum verschieblichen Fixieren eine Klemmeinheit aufweist, wobei die Klemmeinheit einen Schraub- oder Schnellverschluss aufweist.

Es erweist sich als vorteilhaft, wenn die Haltevorrichtung zum verschieblichen Fixieren auf einer Schiene verfahrbar ist. Als besonders kostengünstige und belastbare Variante erweist es sich, wenn die Haltevorrichtung stoffschlüssig mit dem Rahmen verbunden ist, insbesondere mit diesem verschweißt ist.

Das Laufrad oder Fahrrad weist einen Rahmen auf, an dem ein Vorderrad sowie mindestens ein Hinterrad befestigt sind, sowie eine Lenkstange und einen Sattel, die unter einem Abstand zueinander in der Fahrzeugmittellängsebene des Laufrads an dem Rahmen festgelegt sind. Das Laufrad oder Fahrrad weist weiterhin ein System der zuvor beschrieben Art auf, das an einem Oberrohr des Rahmens zwischen dem Sattel und der Lenkstange befestigt sein kann, so dass die Druckplatte mit ihrer Anlagekontur dem Sattel zugewandt ist, und wobei eine Sitzfläche des Sattels in Fahrtrichtung des Laufrads oder Fahrrads nach unten geneigt ist, so dass eine auf dem Sattel sitzende Person infolge der Hangabtriebskraft in Richtung Druckplatte geschoben wird.

Das Fahrrad kann einen Kettentrieb aufweisen, mit einer Kette, zwei Pedalen, zwei Kurbeln, sowie Zahnrädern und Ritzeln. Bei einer Variante des Fahrrads weist der Kettentrieb außerdem eine Gangschaltung auf. Zur Erhöhung der Fahrsicherheit erweist es sich als vorteilhaft, wenn am Rahmen zusätzlich mindestens eine, vorzugsweise zwei Hinterradbremsen montiert sind.

Aufgrund eines vorgesehenen sehr kurzen Radstands weist das Laufrad keine Vorderradbremse auf, um ein Überschlagen bei einem kräftigen Bremsmanöver vermeiden.

Der Sattel kann in seiner vertikalen Position höhenverstellbar und in seiner horizontalen Position verschiebbar sein. Ferner kann zur Erhöhung des Fahrkomforts der Sattel ein Airseat sein.

Dem Prinzip der Selbsthemmung folgend kann der Sattel oder eine Polsterung des Sattels eine reibungsvermindernde Oberfläche aufweisen. Ein Benutzer des Laufrads oder Fahrrads gleitet aufgrund der Hangabtriebskraft entlang der Satteloberfläche in Richtung der Druckplatte und wird in dieser Position angekommen zwischen Druckplatte und Sattel fixiert.

In besonders vorteilhafter Weise beträgt der Neigungswinkel des Sattels gegenüber der Horizontalen 5° - 20° Grad und vorzugsweise 12° Grad. Dadurch wird der Dammbereich durch den in Fahrtrichtung nach vorne unten geneigten Sattel entlastet.

Bei dem Laufrad können der Neigungswinkel des Sattels sowie seine horizontale und vertikale Ausrichtung in der Fahrzeuglängsmittelebene sowie die Ausrichtung der Druckplatte so aufeinander abgestimmt sein, dass bei einer auf dem Sattel sitzenden Person zwischen 20 % und 40 % der Gewichtslast der Person von der Druckplatte und zwischen 50 % und 80 % von dem Sattel abgestützt werden, wobei maximal 10 % der Gewichtslast über die Lenkstange (8) abstützt werden.

Zusätzlich kann es vorteilhaft sein, wenn die Haltevorrichtung innerhalb der Fahrzeuglängsmittelebene des Laufrads entlang des Oberrohrs des Rahmens verschiebbar und wahlweise feststellbar ist.

Darüber hinaus kann das Oberrohr des Laufrads eine Schiene aufweisen, entlang derer die Haltevorrichtung verfahrbar und fixierbar ist.

Ferner kann das Oberrohr eine Aufnahme aufweisen, in der die Haltevorrichtung des Systems höhenverstellbar aufgenommen ist, und wobei die Aufnahme eine Klemmvorrichtung aufweist, mittels derer die Haltevorrichtung in ihrer jeweiligen Höhenposition fixierbar ist.

Außerdem kann die Haltevorrichtung stoffschlüssig mit dem Oberrohr verbunden, insbesondere verschweißt sein.

Zur Unterstützung des Antriebs, beispielsweise zur Erhöhung der mittleren Reisegeschwindigkeit oder zur Bewältigung steiler Anstiege ist es von Vorteil, wenn mindestens eines der Räder einen Nabenmotor aufweist.

Vorteilhafte Ausführungsformen der Erfindung werden anhand der nachstehenden Figuren erläutert. Dabei zeigt:
- Figur 1: ein Laufrad gemäß einer Ausführungsform der Erfindung in der Seitenansicht;
- Figur 2: eine Detailansicht des Laufrad gemäß Figur 1 im Bereich des Systems;
- Figur 3: eine weitere Detailansicht des Laufrads gemäß Figur 1 im Bereich des Systems; und
- Figur 4: Eine Front- sowie Heckansicht des Laufrads mit montiertem System.

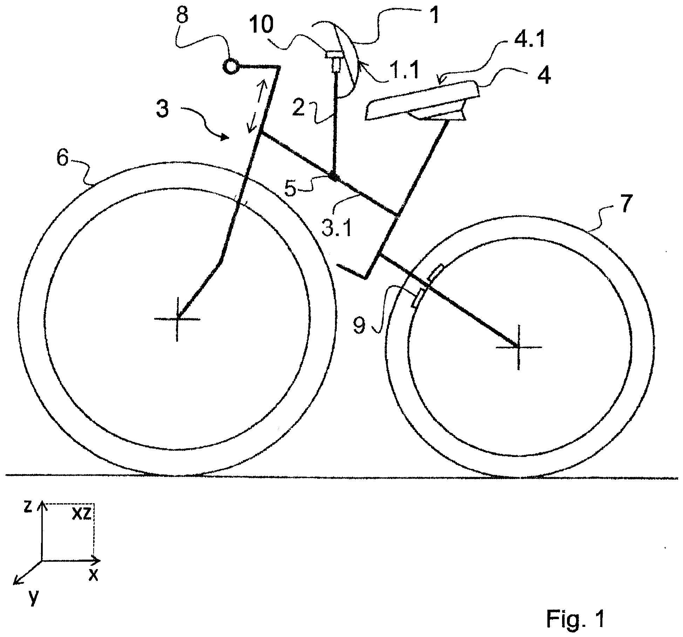

Die in Figur 1 dargestellte Ausführungsform eines erfindungsgemäßen Laufrads weist einen Rahmen 3 auf, an dem ein Vorderrad 6 sowie ein Hinterrad 7, eine Lenkung 8, ein Sattel 4 sowie ein System mit einer Haltevorrichtung 2 sowie einer Druckplatte 1 befestigt sind. Die Räder 6, 7 liegen dabei in einer Ausgangsposition, das heißt bei Geradeausfahrt, in der Fahrzeuglängsmittelebene (xz). Die Räder 6 und 7 sind dabei drehbar am Rahmen 3 gelagert, so dass ihre Drehachsen bei Geradeausfahrt senkrecht zur Fahrzeuglängsmittelebene (xz) stehen. Die Lenkung 8 weist eine Lenkstange auf, an der sich ein Fahrer des Laufrads mit seinen Händen abstützt beziehungsweise festhält und mit der er das Laufrad lenken kann, indem er das Vorderrad 6 aus der Fahrzeuglängsmittelebene (xz) lenkt.

Zur Erhöhung der Sicherheit des Laufrads weist der Rahmen 3 eine doppelte Hinterradbremse 9 auf, vorzugsweise Felgenbremsen, die per Hand mittels an der Lenkstange angeordneten Bremshebeln betätigt werden können. In der dargestellten Ausführungsform kann ein Fahrer mit seinem Gesäß auf dem Sattel 4 sitzen, sich mit seinen Händen an der Lenkstange festhalten und sich mit seinen Füßen auf dem Boden abstützen und sich dort für den Vortrieb abdrücken. Zur Unterstützung des Sattels 4 und insbesondere zur Entlastung des Gesäßes oder des Dammbereichs des Fahrers liegt der Bauch des Fahrers an der Druckplatte 1 an, die einen wesntlichen Teil des Körpergewichts abstützt.

Dazu ist die Druckplatte 1 über die Haltevorrichtung 2 am Rahmen 3 befestigt, wobei am oberen Ende der Haltevorrichtung 2 die Druckplatte 1 befestigt ist. Die Haltevorrichtung 2 ist dabei vorzugsweise an einem Oberrohr des Rahmens 3 befestigt. Diese ist dabei entlang des Oberrohrs wahlweise mittels einer Klemmschelle oder einer Schiene verschiebbar und an einer gewünschten Position fixierbar. Darüber hinaus ist die Haltevorrichtung 2 höhenverstellbar, beispielsweise mittels einer Teleskopstange, die in einer beliebigen Höhe fixierbar ist. Ziel dabei ist es, den Sattel 4 und die Druckplatte 1 so zueinander auszurichten, dass bei beliebigen Körpergeometrien eines Fahrers das Gesäß des Fahrers auf dem Sattel 4 Platz findet und die Druckplatte 1 am Bauch des Fahrers anliegt. Dabei sollte die Druckplatte 1 möglichst nicht an den Rippen des Fahrers anliegen, vorzugsweise weist die Druckplatte 1 daher eine fahrerseitig konvexe Geometrie auf. Aufgrund der konvexen Druckplatte in Form und Größe bleibt die Anlage für die Bauchregion immer flächenhaft. Die konvexe Geometrie ermöglicht es zusätzlich, dass der Fahrer sich während der Fahrt in verschiedenen Positionen von vollständig nach vorne gebeugt bis aufrecht sitzend auf dem Laufrad bewegen kann.

Dabei kann die Druckplatte 1 an der Haltvorrichtung 2 angeschweißt sein. Als Anlagefläche für den Bauch erweist sich insbesondere eine Druckplatte 1 mit einer Breite von 20 cm bis 30 cm und einer Höhe von 15 cm bis 25 cm, vorzugsweise aber einer Breite von 25 cm und einer Höhe von 18 cm als vorteilhaft.

Der Vorteil der Druckplatte 1 besteht nicht nur in der Aufnahme eines Teils des Körpergewichts des Fahrers und der Entlastung seines Dammbereichs, sondern auch in einer stabileren Sitzposition durch die Fixierung des Fahrers zwischen Sattel und Druckplatte. Dadurch wird dem Fahrer ein leichtes Rangieren des Fahrzeugs ermöglicht. Insbesondere in Innenräumen mit nur wenig Raumangebot, in denen ein häufiger Richtungswechsel zwischen vorwärts und rückwärts nicht unüblich ist, ist dieser Effekt von Vorteil. Somit wird insbesondere eine bessere Übertragung der Bewegungsimpulse gewährleistet. Um einen Nutzer des Laufrads möglichst komfortabel zwischen Sattel 4 und Druckplatte 1 zu fixieren, so dass der Nutzer beim Laufen mit dem Laufrad nicht verrutscht, weist der Sattel 4 vorzugsweise einen, in Fahrtrichtung gegenüber der Horizontalen abfallenden Neigungswinkel β von 12° auf. Dadurch bleibt der Nutzer des Laufrads dauerhaft in direktem Kontakt mit der konvexen Druckplatte 1 und dem Sitz 4 und der Dammbereich wird durch die nach vorne unten geneigten Sattel entlastet. Dies bedeutet ein Mehr an Sicherheit. Gleichzeitig wird der Bewegungsimpuls direkt ohne Verlust durch den Nutzer des Laufrads über die konvexe Druckplatte auf das Laufrad übertragen. Außerdem bleibt durch die Form und die Größe der konvexen Druckplatte 1 und der Montage derselben in der Höhe der Bauchmuskulatur die Bauchregion ohne negatives Druckempfinden. Ein weiterer Vorteil des nach vorne und unten geneigten Sattels 4 ist, dass der Laufradnutzer ausschließlich auf seinen Sitzbeinhöckern sitzt. Damit ist jeglicher Druck im Dammbereich des Laufradnutzers ausgeschlossen. Weiterhin vorteilhaft ist, dass durch die konvexe Form und die Größe der Druckplatte 1 mit ihrer Schrägstellung variabel das Gewicht des Rumpfes des Laufradnutzers aufnimmt, sobald sich dieser beispielsweise im schnellen Lauf mit mehr Körpervorneigung bewegt. Dadurch werden die Hände, Arme und Schultern des Laufradnutzers entlastet.

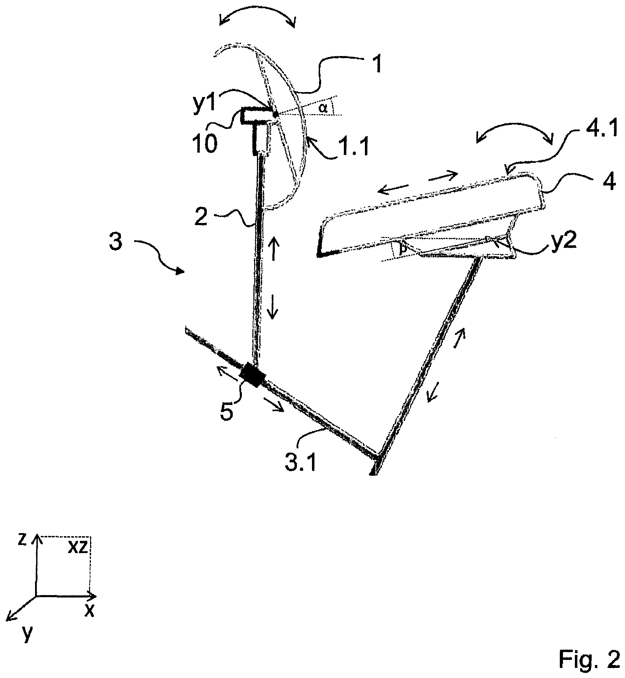

Figur 2 zeigt eine Detailansicht eines beispielshaften erfindungsgemäßen Laufrads, bei dem insbesondere der Sattel 4, der mittels einer höhenverstellbaren Sattelstange an dem Rahmen 3 befestigt ist, zu sehen ist, sowie das am Rahmen 3 befestigte System, das aus der Haltevorrichtung 2 und der Druckplatte 1 besteht.

Weiterhin ist zu erkennen, dass sowohl die Haltevorrichtung für die Druckplatte 1 als auch die Sattelstange des Sattels 4 höhenverstellbar sind. Die Höhenverstellung der Sattelstange erfolgt dabei in klassischer Weise mittels einerseits der Sattelstange und andererseits einer dazu entsprechend vorgesehenen Aufnahme im Rahmen 3, wobei mittels eines Klemm- beziehungsweise eines sogenannten Schnellverschlusses die Position der Sattelstange in einer beliebigen Höhe einstellbar ist. Analog dazu kann die Höhenverstellung des Systems beziehungsweise der Haltevorrichtung des Systems erfolgen, wobei hierfür eine zusätzliche Aufnahme im Rahmen 3 für die Haltevorrichtung 2 vorzusehen ist. Auch dabei erfolgt das Einstellen der Haltevorrichtung 2 auf einer gewünschten Höhe mittels Verschieben der Haltevorrichtung 2 in der entsprechenden Aufnahme und mittels Festlegen beziehungsweise Fixieren der Haltevorrichtung 2 mittels eines Klemm- oder Schnellverschlusses. Alternativ dazu kann die Haltevorrichtung 2 in sich höhenverstellbar sein, indem sie beispielsweise als Teleskopstange ausgeführt ist, die ihrerseits beliebig höhenverstellbar und fixierbar ist. Vorteilhaft wäre hierbei, wenn die Halteeinrichtung 2 dabei mittels einer Klemmeinheit 5 verschieblich auf einem Oberrohr des Rahmens 3 befestigt ist. Die Klemmeinheit 5 kann dabei wahlweise eine Klemmschelle oder eine Schiene sein, die eine entsprechende Klemmvorrichtung aufweist. Weiterhin kann vorgesehen sein, dass die Haltevorrichtung 2 an den Rahmen 3 angeschweißt ist, um eine möglichst starre und stabile Verbindung zu erzielen. Darüber hinaus kann der Sattel 4 in seiner horizontalen Stellung gegenüber der Sattelstange verschiebbar und fixierbar sein.

Vorzugsweise ist der Sattel ein Airseat. Es ist außerdem erkennbar, dass der Radius des konvexen Verlaufs der Druckplatte 1 zur Mitte hin abnimmt. Dieser Verlauf ist notwendig, um einerseits eine komfortable Anlagefläche für den Bauch beziehungsweise die Baumuskulatur bereitzustellen, und andererseits zu vermeiden, dass ein Nutzer des Laufrads mit seinen Rippen und/oder der Schambeinfuge an der Druckplatte anliegt.

Das Laufrad kann allerdings auch als ein Fahrrad ausgebildet sein, das klassischerweise einen Kettenantrieb aufweist, der aus einer Kette, zwei Pedalen, zwei Kurbeln sowie Zahnrädern und Ritzeln besteht. Außerdem kann der Kettenantrieb eine Gangschaltung aufweisen. Zur Unterstützung des Antriebs oder zum vollständigen muskelunabhängigen Fortbewegen kann auch mindestens eine Nabe des Fahrrads einen Elektromotor aufweisen.

Die Ausführung der Druckplatte 1 samt ihrer Haltevorrichtung 2 als System hat insbesondere den Vorteil, dass dieses demontiert werden kann und bei beliebigen Fahrrädern oder Laufrädern mit ähnlicher Rahmen- und Sattelgeometrie verwendet werden kann. Außerdem ist das Laufrad/Fahrrad beziehungsweise das System durch die Demontierbarkeit über die Klemmeinheit 10 wesentlich besser transportabel.

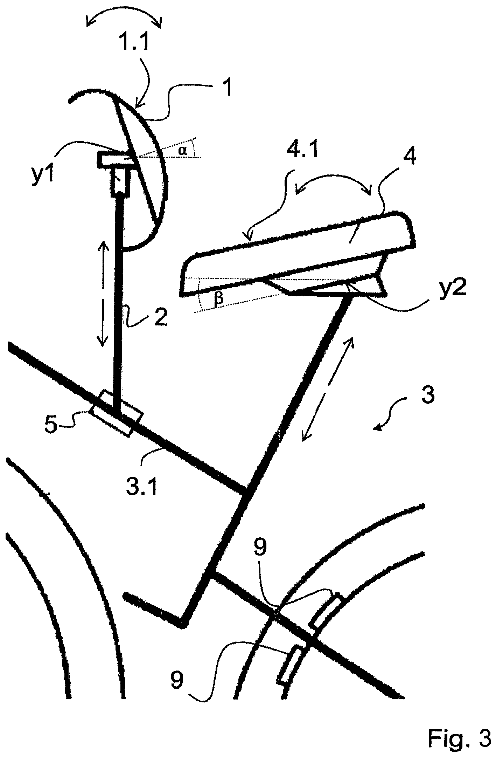

Figur 3 zeigt eine weitere Seitenansicht des Laufrads mit montiertem System. Mittels Befestigungsmittel 5 ist dieser verschieblich am Oberrohr 3.1 des Rahmens 3 fixiert. Weiterhin ist die höhenverstellbare Haltevorrichtung 2 abgebildet. Darüber hinaus zeigt Figur 3 den höhenverstellbaren Sattel 4, der außerdem in seiner horizontalen Position individuell verstellt und arretiert werden kann. Vorzugsweise weist die Druckplatte 1 entgegen einer angenommenen Fahrtrichtung unter einem Winkel α schräg nach oben und der Sattel 4 in Fahrtrichtung um einen Winkel β von vorzugsweise 12° nach unten, so dass ein Nutzer des Laufrads einen optimalen Halt bekommt, indem er zwischen Sattel 4 und Druckplatte 1 fixiert ist und insbesondere seine Arme, Hände und Handgelenke entlastet werden.

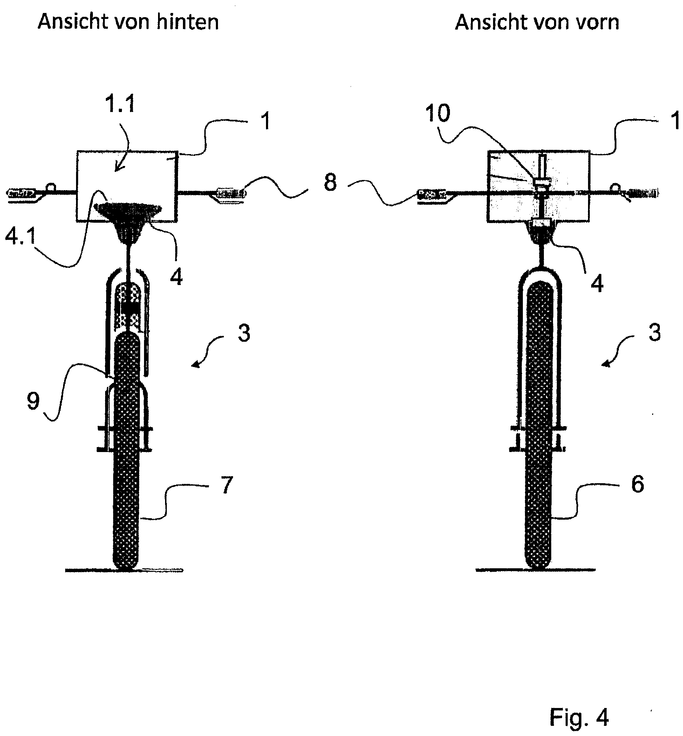

Figur 4 zeigt eine Vorder- sowie eine Hinteransicht des Laufrads, an dem jeweils das System montiert ist. Es ist insbesondere zu sehen, dass sich die Druckplatte 1 im Wesentlichen senkrecht zur Fahrzeuglängsmittelebene xz erstreckt und eine Anlagefläche 1.1 für das Abdomen beziehungsweise die Bauchmuskulatur eines Nutzers des Laufrads bietet. In der Vorderansicht ist darüber hinaus die Klemmvorrichtung der Druckplatte 1 abgebildet. Das erfindungsgemäße Laufrad mit montiertem System weist so geringe Abmessungen auf, dass sich ein Nutzer des Systems damit auch problemlos in Räumen bewegen kann.

### Bezugszeichenliste:

- 1: Druckplatte
- 1.1: Anlagekontur
- 2: Haltevorrichtung
- 3: Rahmen
- 3.1: Oberrohr
- 4: Sattel
- 4.1: reibungsvermindernde Oberfläche
- 5: Befestigungsmittel
- 6: Vorderrad
- 7: Hinterrad
- 8: Lenkstange
- 9: Hinterradbremse(n)
- 10: Anschlagkante
- xz: Fahrzeuglängsmittelebene
- y1: Schwenkachse Druckplatte
- y2: Drehachse Sattel
- α: Anstellwinkel der Druckplatte
- β: Anstellwinkel des Sattels

## Patentansprüche

1. System für ein Laufrad oder ein Fahrrad, wobei das System eine Druckplatte (1) mit einer Anlagekontur (1.1) für das Abdomen einer Person sowie eine Haltevorrichtung (2) aufweist, wobei die Druckplatte (1) gegenüber der Vertikalen angeschrägt ist, so dass ein unteres Ende der Druckplatte (1) einem oberen Ende der Druckplatte vorgelagert ist, wobei die Druckplatte (1) dazu eingerichtet ist, mittels der Haltevorrichtung (2) unter einem vertikalen Abstand an einem Rahmen (3) des Landfahrzeugs zwischen einer Lenkstange (8) und einem Sattel (4) und mit der Anlagekontur (1.1) dem Sattel (4) zugewandt befestigt werden zu können, so dass das untere Ende der Druckplatte (1) einen kürzeren Abstand zu dem Sattel (4) aufweist als das obere Ende der Druckplatte (1).

2. System nach Anspruch 1, **dadurch gekennzeichnet, dass** die Druckplatte (1) an einem oberen Ende der Haltevorrichtung (2) befestigt ist und die Haltevorrichtung (2) an ihrem unteren Ende ein Befestigungsmittel (5) zur Befestigung der Haltevorrichtung am Rahmen (3) des Landfahrzeugs aufweist.

3. System nach Anspruch 1 oder 2, **dadurch gekennzeichnet, dass** die Haltevorrichtung (2) mittig an der der Anlagekontur (1.1) abgewandten Seite der Druckplatte (1) befestigt ist.

4. System nach einem der vorhergehenden Ansprüche, **dadurch gekennzeichnet, dass** der vertikale Abstand der Druckplatte (1) zum Rahmen (3) über die Klemmeinheit (10) variabel einstellbar ist.

5. System nach einem der vorhergehenden Ansprüche, **dadurch gekennzeichnet, dass** die Anlagekontur (1.1) der Druckplatte (1) im Querschnitt durch die Fahrzeuglängsmittelebene (xz) einen konvexen Verlauf aufweist.

6. System nach Anspruch 5, **dadurch gekennzeichnet, dass** ein Krümmungsradius des konvexen Verlaufs der Anlagekontur (1.1) von dem ersten Ende und dem zweiten Ende der Anlagekontur (1.1) zur Mitte der Anlagekontur (1.1) zwischen dem ersten und dem zweiten Ende hin zunimmt, so dass die Anlagekontur (1.1) im Bereich der Enden stärker gekrümmt ist als in der Mitte.

7. Laufrad oder Fahrrad mit einem Rahmen (3), an dem ein Vorderrad (6) sowie ein Hinterrad (7) befestigt sind, sowie mit einer Lenkstange (8) und einem Sattel (4), die unter einem Abstand in der Fahrzeugmittellängsebene (xz) des Laufrads an dem Rahmen festgelegt sind, und mit einem System nach einem der vorangegangenen Ansprüche, das an einem Oberrohr (3.1) des Rahmens (3) zwischen dem Sattel (4) und der Lenkstange (8) befestigt ist, so dass die Druckplatte (1) mit ihrer Anlagekontur (1.1) dem Sattel (4) zugewandt ist, und wobei eine Sitzfläche (4.1) des Sattels (4) in Fahrtrichtung des Laufrads nach unten geneigt ist, so dass eine auf dem Sattel (4) sitzende Person infolge der Hangabtriebskraft in Richtung Druckplatte geschoben wird.

8. Laufrad oder Fahrrad nach Anspruch 7, **dadurch gekennzeichnet, dass** der Sattel (4) in seiner vertikalen Position höhenverstellbar und in seiner horizontalen Position verschiebbar ist.

9. Laufrad oder Fahrrad nach Anspruch 7 oder 8, **dadurch gekennzeichnet, dass** eine Sitzfläche (4.1) des Sattels (4) eine reibungsvermindernde Oberfläche aufweist.

10. Laufrad oder Fahrrad nach einem der Ansprüche 7 bis 9, **dadurch gekennzeichnet, dass** ein Neigungswinkel (β) des Sattels (4) gegenüber der Horizontalen 5° - 20° Grad, insbesondere 10° bis 14° und vorzugsweise 12° Grad beträgt.

11. Laufrad oder Fahrrad nach einem der Ansprüche 7 bis 10, **dadurch gekennzeichnet, dass** der Neigungswinkel (β) des Sattels (4) sowie seine horizontale und vertikale Ausrichtung in der Fahrzeuglängsmittelebene (xz) sowie die Ausrichtung der Druckplatte (1) dazu eingerichtet sind, dass bei einer auf dem Sattel (4) sitzenden Person zwischen 20 % und 40 % der Gewichtslast der Person von der Druckplatte und zwischen 50 % und 80 % von dem Sattel abgestützt werden, wobei maximal 10 % der Gewichtslast über die Lenkstange (8) abstützt werden.

12. Laufrad oder Fahrrad nach einem der Ansprüche 7 bis 11, **dadurch gekennzeichnet, dass** die Haltevorrichtung (2) innerhalb der Fahrzeuglängsmittelebene (xz) des Laufrads entlang des Oberrohrs (3.1) des Rahmens (3) verschiebbar und wahlweise feststellbar ist.

13. Laufrad oder Fahrrad nach einem der Ansprüche 7 bis 12, **dadurch gekennzeichnet, dass** das Oberrohr (3.1) des Laufrads eine Schiene aufweist, entlang derer die Haltevorrichtung (2) verfahrbar und fixierbar ist.

14. Laufrad oder Fahrrad nach einem der Ansprüche 7 bis 13, **dadurch gekennzeichnet, dass** das Oberrohr (3.1) eine Aufnahme aufweist, in der die Haltevorrichtung des Systems höhenverstellbar aufgenommen ist, und wobei die Aufnahme eine Klemmvorrichtung aufweist, mittels derer die Haltevorrichtung in ihrer jeweiligen Höhenposition fixierbar ist.

15. Laufrad oder Fahrrad nach einem der Ansprüche 7 bis 14, **dadurch gekennzeichnet, dass** mindestens eines der Räder einen Nabenmotor aufweist.
